Europäisches Patentamt

European Patent Office

Office européen des brevets

(11) Veröffentlichungsnummer: **0 301 321**
**A1**

## EUROPÄISCHE PATENTANMELDUNG

(21) Anmeldenummer: **88111255.1**

(22) Anmeldetag: **13.07.88**

(51) Int. Cl.4: **H01G 4/30 , H01C 7/10 , H01C 1/14**

(30) Priorität: **31.07.87 DE 3725455**

(43) Veröffentlichungstag der Anmeldung:
**01.02.89 Patentblatt 89/05**

(84) Benannte Vertragsstaaten:
**AT BE CH DE ES FR GB IT LI**

(71) Anmelder: **Siemens Aktiengesellschaft Berlin und München**
**Wittelsbacherplatz 2**
**D-8000 München 2(DE)**

(72) Erfinder: **Röss, Erich, Dr.**
**Ziehrerstrasse 56**
**D-8025 Unterhaching(DE)**

(54) **Elektrisches Vielschichtbauelement mit einem gesinterten, monolithischen Keramikkörper und Verfahren zur Herstellung des elektrischen Vielschichtbauelementes.**

(57) Der gesinterte monolithische Keramikkörper (1) des elektrischen Vielschichtbauelementes weist Hohlräume (2, 3) auf, die alternierend von Lage zu Lage zu einander gegenüberliegenden Stirnflächen (4, 5) und über ihre gesamte Länge zu den Seitenflächen (6, 7) hin offen sind; diese Hohlräume (2, 3) enthalten im Volumen verteilt Keramikpartikel (8) als Stützelemente und sind vollständig mit einem Metall oder einer Metallegierung gefüllt, deren Schmelztemperaturen erheblich niedriger sind als die Sintertemperatur des Keramikkörpers (1) und die die Eigenschaft aufweisen, im flüssigen Zustand die Flächen der Keramikschichten (9, 10) in den Hohlräumen (2, 3) zu benetzen; an den Stirnflächen (4, 5) sind Kontaktschichten enthalten, die für die Metallschmelze dicht sind: ferner sind in den Hohlräumen (2, 3) an den Seitenflächen (6, 7) von Metall freie Räume vorhanden.

FIG 1

## Elektrisches Vielschichtbauelement mit einem gesinterten, monolithischen Keramikkörper und Verfahren zur Herstellung des elektrischen Vielschichtbauelementes

Die Erfindung betrifft ein elektrisches Vielschichtbauelement, insbesondere Kondensator, Kaltleiter oder Varistor, mit den Merkmalen:

a) ein gesinterter, monolithischer Keramikkörper aus keramischem Material mit dielektrischen oder halbleitenden Eigenschaften ist

b) mit Hohlräumen versehen, die alternierend von Lage zu Lage zu einander gegenüberliegenden Stirnflächen und wenigstens zu einem Teil zu den angrenzenden Seitenflächen hin offen sind und im Volumen verteilt Keramikpartikel enthalten, welche in den Hohlräumen als Stützelemente zwischen jeweils einer oberen Keramikschicht und einer unteren Keramikschicht dienen,

c) die Hohlräume sind mit Metallbelegungen vollständig gefüllt, die aus einem Metall oder einer Metallegierung bestehen, deren Schmelztemperaturen erheblich niedriger sind, als die für die Sinterung des Keramikkörpers erforderliche Temperatur,

d) an den Stirnflächen und gegebenenfalls auch auf die Seitenflächen herumreichend sind Kontaktschichten vorhanden, die jeweils die Metallbelegungen miteinander elektrisch leitend verbinden und selbst oder durch eine weitere Metallauflage lötfähig sind.

Die Erfindung betrifft ferner ein Verfahren zur Herstellung eines solchen elektrischen Vielschichtbauelementes mit den Verfahrensschritten:

a) es werden 0,03 bis 0,1 mm dicke Schichten, deren Breite und Länge je ein Vielfaches der Breite und Länge der späteren Keramikkörper betragen, aus einer Suspension, die dielektrisches oder halbleitendes Material in feiner Verteilung enthält, hergestellt und getrocknet,

b) auf diese Schichten wird in Form von abgegrenzten Bereichen in bestimmter Anordnung und in einer Dicke von 0,005 bis 0,02 mm eine Suspension aufgetragen (z.B. aufgedruckt) und eingetrocknet, die beim späteren Sintern gemäß Verfahrensschritt e) entweichende Bestandteile (Oxide, Karbonate, Kohlenstoff oder Ruß) und Keramikpartikel enthält, die beim späteren Sintern gemäß Verfahrensschritt e) im wesentlichen unverändert bleiben,

c) aus einer Vielzahl solcher Schichten wird ein Stapel gebildet, in welchem sich die Suspensionsbereiche in großen Teilbereichen überlappen und der gegebenenfalls oberhalb und/oder unterhalb mit von Suspensionsbereichen freien, als Decklagen dienenden Suspensionsschichten versehen ist,

d) der Stapel wird durch einen Preßvorgang verdichtet und anschließend oder erst nach dem Sintern längs von Schnittlinien in Längs- und in Querrichtung zerteilt,

e) der verdichtete Stapel oder die daraus entstandenen Einzelkörper werden mit entsprechendem Aufheiz- und Abkühlverlauf bei Temperaturen von 1000 °C oder höher gesintert,

f) die gesinterten Keramikkörper werden an den Stirnflächen mit Kontaktschichten versehen,

g) die mit Kontaktschichten versehenen Keramikkörper werden in einem Autoklaven, gegebenenfalls nach vorheriger Evakuierung, in eine Metallschmelze zum Einpressen von Metall in die Hohlräume mittels Überdruck getaucht und dann oberhalb der Metallschmelze abgekühlt mit anschließender Reduktion des Überdruckes auf Normaldruck.

Elektrische Vielschichtkondensatoren mit einem gesinterten, monolithischen Keramikkörper aus dielektrischem Material, auf die sich die vorliegende Erfindung vorzugsweise bezieht, sind bereits in vielfacher Weise in der Patentliteratur beschrieben worden. Von dieser vielfältigen Patentliteratur kommen der vorliegenden Erfindung die USA-Patentschriften 3 679 950, 4 071 880 und 4 658 328, die der DE-OS 36 12 084 entspricht, am nächsten.

In der US-PS 3 679 950 ist ein keramischer Vielschichtkondensator beschrieben, der die Merkmale des eingangs angegebenen Vielschichtkondensators aufweist, mit der Ausnahme, daß die Hohlräume alternierend von Lage zu Lage nur zu einander gegenüberliegenden Stirnflächen, nicht aber zu den angrenzenden Seitenflächen hin offen sind.

In dieser USA-Patentschrift ist auch ein Verfahren zur Herstellung eines solchen elektrischen Vielschichtkondensators beschrieben, bei dem sämtliche oben angegebenen Verfahrensschritte verwirklicht sind, jedoch mit der Maßgabe, daß die gemäß Verfahrensschritt b) aufzutragenden Suspensionsbereiche derart ausgewählt sind, daß letztlich nur jeweils zu einer Seite offene Hohlräume entstehen. Da im fertigen Stapel aus mehreren derart vorbereiteten Schichten die Suspensionsbereiche praktisch rundherum verschlossen sind, ist es erforderlich, daß bereits dieser Stapel längs von senkrecht zueinander stehenden Trennlinien in Einzelkörper aufgetrennt wird, damit beim nachfolgenden Sintervorgang, für den ein entsprechendes Aufheiz-, Sinter- und Abkühlschema erforderlich ist, das Entweichen und/oder das Zersetzen der zu entfernenden Bestandteile aus den Suspensionsbereichen zur Bildung der Hohlräume erfolgen kann.

Zur Herstellung der Kondensatorbelegungen innerhalb der Hohlräume des monolithischen Keramikkörpers wird - neben anderen Möglichkeiten - niedrig schmelzendes Metall oder niedrig schmelzende Metallegierungen, beispielsweise Blei oder eine Legierung aus 50 % Bi, 25 % Pb, 12,5 % Sn und 12,5 % Cd angegeben. Alle diese Legierungen haben Schmelztemperaturen, die beträchtlich niedriger sind, als die für die Sinterung des monolithischen Keramikkörpers erforderliche Sintertemperatur von bis zu 1325° C. Außerdem benetzen diese Legierungen die Oberfläche der Keramikkörper, insbesondere in den Hohlräumen, nur sehr schlecht oder gar nicht.

Die Kontaktschichten, meist aus Silber bestehend, werden an den gegenüberliegenden Stirnflächen bei dem in der US-PS 3 679 950 beschriebenen Vielschichtkondensator stets nach dem Einpressen des niedrig schmelzenden flüssigen Metalles und Abkühlen des getränkten Keramikkörpers aufgebracht.

In der US-PS 4 071 880 ist praktisch der gleiche elektrische Vielschichtkondensator mit einem gesinterten, monolithischen Keramikkörper beschrieben, für den insoweit die gleichen Überlegungen gelten, wie für den aus der US-PS 3 679 950 bekannten Vielschichtkondensator.

In der US-PS 4 071 880 ist darüberhinaus auch die Möglichkeit ausführlich beschrieben, die Kontaktschichten auf die Stirnflächen des monolithischen Keramikkörpers vor dem Tränken desselben aufzubringen, wofür diese Kontaktschichten porös ausgebildet sein müssen.

Der in der US-PS 4 071 880 beschriebene Vielschichtkondensator besteht aus einer Mehrzahl von wechselweise aufeinanderliegenden Keramikschichten und inneren Elektroden (Kondensatorbelegungen) sowie äußeren Doppelschichtelektroden (Kontaktschichten), die in vorbestimmter Weise mit den inneren Elektroden verbunden sind. Beispielsweise liegt eine kammartige Elektrodenstruktur vor.

Bei der Herstellung eines solchen monolithischen Vielschichtkondensators werden zunächst unbehandelte bzw. ungesinterte Keramikplättchen (Suspensionsschichten) mit Hilfe eines Abstreif- bzw. Rakelverfahrens unter Verwendung einer Abstreifklinge hergestellt. Diese Keramikplättchen besitzen eine Dicke von 0,05 bis 0,1 mm. Auf die Oberflächen der Keramikplättchen wird dann eine Kohlen- bzw. Kohlenstoffpaste aufgetragen bzw. aufgedruckt, die aus einer Mischung von Kohle- bzw. Kohlenstoffpulver und Keramikpulver besteht. Diese Paste (Suspension) wird in abgegrenzten Bereichen aufgetragen, und zwar so, daß die Hohlräume im fertigen Keramikkörper alternierend nur zu gegenüberliegenden Stirnflächen offen sind.

Mehrere solcher bedruckter Keramikplättchen werden abwechselnd aufeinanderliegend angeordnet und durch Anwendung einer Druckkraft miteinander zur Bildung einer integrierten Struktur verbunden. Aus dieser integrierten Struktur werden durch Auftren nung längs von senkrecht aufeinanderstehenden Schnittlinien Einzelkörper erzeugt, die bei einer Temperatur oberhalb von 1000° C gebrannt werden, um die keramischen Plättchen zu sintern und um das Kohle- bzw. Kohlenstoffpulver innerhalb der aufgedruckten Kohlenstoffpaste zu beseitigen. Dadurch werden poröse Zwischenschichten mit Keramikpulver in Bereichen erzeugt, in denen die inneren Elektroden gebildet werden sollen. Im Anschluß daran werden die porösen äußeren Elektroden (Kontaktschichten) an die gesinterten Einzelkörper angebracht.

Dies kann dort wie auch bei der vorliegenden Erfindung beispielsweise durch Verfahren erfolgen, die in den US-PSen 3 683 849, 4 526 129 und 4 561 954, in der GB-PS 2 106 714, der DE-PS 27 22 140 oder in der DE-OS 36 38 286 beschrieben sind.

Die äußeren Elektroden werden beispielsweise durch Einbrennen einer Paste erhalten, die hauptsächlich aus Nickel besteht, das mit einer Glasurmasse vermischt ist. Der auf diese Weise gebildete Keramikkörper wird dann in einen Druckbehälter eingeführt und in geschmolzenes Blei, das als Leitungsmaterial für die Kondensatorbelegungen dient, bei einer Temperatur der Schmelze von etwa 330 bis 360° C und im dekomprimierten Zustand eingetaucht. Anschließend wird der Druck auf etwa 10 bar (atm) erhöht, so daß geschmolzenes Blei unter Druck in die Hohlräume des Keramikkörpers eindringt, und zwar ausschließlich durch die porösen äußeren Elektroden hindurch. Der Keramikkörper wird dann aus dem geschmolzenen Blei herausgezogen, abgekühlt und wiederum dem Normaldruck ausgesetzt, so daß sich die inneren Elektroden aus Blei bilden. Im Anschluß daran werden auf die äußeren Elektroden zusätzlich Schichten aufgetragen, die eine gute Lötbarkeit aufweisen.

Zur Herstellung des beschriebenen Vielschichtkondensators müssen die auf den monolithischen Keramikkörper aufgebrachten äußeren Elektroden porös sein und so ausgebildet bzw. hergestellt werden, daß zunächst ein Eintritt des flüssigen Bleis für die inneren Elektroden möglich ist, daß sie andererseits aber verhindern, daß das Blei wieder aus den Hohlräumen des Keramikkörpers herausfließt, wenn dieser aus dem geschmolzenen Blei herausgezogen wird, weil - wie ausdrücklich in Spalte 10, Zeilen 51 bis 58 der US-PS 4 071 880 empfohlen wird - die einzupressende Metallschmelze den Keramikkörper nicht leicht benetzen darf. Mit anderen Worten bilden die porösen äußeren Elektroden in bestimmten Zuständen Durchdringungsbarrieren. Die porösen äußeren Elektroden bestehen hauptsächlich aus Nickel, das mit Blei nicht reagiert. Die Haftfestigkeit an den Stirnflächen des Keramikkörper hängt von der Menge der Glasurmasse innerhalb der Paste ab, wobei die Haftstärke mit steigender Menge an Glasurmasse verbessert wird. In diesem Fall jedoch vermindert sich die Anzahl der Poren der äußeren Elektroden, so daß die Durchdringung von Blei erschwert wird, während Glaskomponenten die Zwischenschichten blockieren und die Zufuhr von Blei beeinträchtigen. Die elektrostatische Kapazität kann daher nicht in gewünschter Weise eingestellt werden, selbst wenn der Keramikbaustein innerhalb der Schmelze einem relativ hohem Druck ausgesetzt wird.

In der US-PS 4 658 328 (entsprechend der DE-OS 36 12 084) ist zur Lösung der beschriebenen Probleme vorgeschlagen, die Hohlräume im Inneren des Keramikkörpers so zu gestalten, daß sie sowohl an den einander gegenüberliegenden Stirnflächen als auch zu einem geringen Teil an den angrenzenden Seitenflächen offen sind, damit das geschmolzene Metall beim Injektionsprozeß nicht nur durch die porösen Kontaktschichten hindurch, sondern auch durch die zu einem geringen Teil an den Seitenflächen offenen und von Kontaktschichten freien Teile der Hohlräume eindringen kann, dann aber dennoch nicht aus den Hohlräumen wieder ausfließen kann.

Der in der US-PS 4 658 238 beschriebene Vielschichtkondensator weist insofern alle Merkmale des oben angegebenen Vielschichtkondensators auf.

In dieser US-PS bzw. in der entsprechenden DE-OS ist auch ein Verfahren beschrieben, das die für das Herstellungsverfahren oben angegebenen Verfahrensschritte umfaßt, jedoch mit der Maßgabe, daß die an den Stirnflächen angebrachten Kontaktschich ten nach wie vor porös sind.

In den nicht vorveröffentlichten deutschen Offenlegungsschriften 36 27 936 und 36 27 929 sind Vielschichtkondensatoren mit einem gesinterten monolithischen Keramikkörper und Verfahren zu ihrer Herstellung beschrieben, die ebenfalls die Merkmale des eingangs angegebenen Vielschichtkondensators bzw. des Verfahrens zu seiner Herstellung aufweisen. In diesen Offenlegungsschriften wird vorgeschlagen, als niedrig schmelzendes Metall für die Kondensatorbelegungen ein solches zu verwenden, das im Gegensatz zu den für diese Zwecke bisher bekannten Metallen oder Metallegierungen die Oberflächenteile innerhalb der Hohlräume des Keramikkörpers gut benetzt. Für diese Metalle bzw. Legierungen sind eine Reihe von Vorschlägen gemacht, die auch als für die vorliegende Erfindung geeignete Metalle oder Metallegierungen gelten.

Das Einpressen dieser Metalle in die Keramikkörper erfolgt gemäß diesen Offenlegungsschriften nach wie vor durch die jeweils nur zu einer Seite gerichteten Öffnungen der Hohlräume, die entweder noch frei von einer Kontaktschicht sind oder mit einer porösen Kontaktschicht bedeckt sein können. Im ersten Fall werden die Kontaktschichten nachträglich aufgebracht.

Die Verwendung eines die Oberfläche des Keramikkörpers gut benetzenden Metalles hat den Vorteil, daß dieses Metall aus den Hohlräumen des Keramikkörpers beim Herausnehmen aus der Metallschmelze nicht mehr herausfließt und daß eine gute Anbindung der Kondensatorbelegungen an die Kontaktschichten gewährleistet ist.

Beim Einpressen der niedrig schmelzenden Metallegierung durch poröse Kontaktschichten hindurch in die Hohlräume im Keramikkörper, die nur zu einer Seite hin offen sind, treten die bereits oben beschriebenen Probleme auf, die sich auch durch die Verwendung gut benetzender Metalle oder Metallegierungen nicht beseitigen lassen, nämlich die Gefahr der Verstopfung der Poren in der porösen Schicht und damit eine unzureichende Ausfüllung der Hohlräume. Beim Anbringen der Kontaktschichten nach dem Einpressen der Metallschmelze und Abkühlen der gefüllten Keramikkörper entstehen wiederum Probleme, die darin bestehen, daß die Anbindung der Kondensatorbelegungen im Inneren des Keramikkörpers an die Kontaktschichten an den Stirnflächen unzureichend sein kann.

Keramische Kaltleiter in Schichtbauweise sind beispielsweise in der GB-PS 932 558 und keramische Vielschichtvaristoren sind beispielsweise in der US-PS 4 675 644, entsprechend EP-A-0 189 087, beschrieben.

Der vorliegenden Erfindung liegt die Aufgabe zugrunde, ein elektrisches Vielschichtbauelement und ein Verfahren zu seiner Herstellung anzugeben, um zu gewährleisten, daß einerseits eine vollständige Füllung der Hohlräume im Keramikkörper und eine gute Anbindung, d.h. eine Verbindung mit geringem elektrischem Übergangswiderstand, zwischen den Belegungen im Inneren des Keramikkörpers und den Kontaktschichten erreicht werden und andererseits eine wesentliche Vereinfachung des Herstellungsverfahrens sichergestellt wird.

Zur Lösung dieser Aufgabe ist das elektrische Vielschichtbauelement der eingangs genannten Art erfindungsgemäß gekennzeichnet durch die weiteren Merkmale:

e) die Hohlräume sind über ihre gesamnte Länge zu den Seitenflächen hin offen,

f) die Metallbelegungen bestehen aus einem Metall oder einer Metallegierung mit der Eigenschaft, im flüssigen Zustand die Flächen der Keramikschichten in den Hohlräumen gut zu benetzen,

g) durch die Kontraktion des abgekühlten Metalles der Metallbelegungen sind in den Hohlräumen an den Seitenflächen von Metall freie Räume vorhanden,

h) die Kontaktschichten an den Stirnflächen sind nicht porös.

Für die Metallbelegungen können vorzugsweise unterschiedliche Legierungen verwendet werden, so beispielsweise eine Blei-In dium-Legierung mit einem Indiumanteil von gleich oder größer als 0,5 Gew-%, insbesondere 2,5 bis 20 Gew-%, ferner eine Blei-Silber-Indium-Legierung mit wenigstens 0, 5 Gew-% Indium und insgesamt bis 20 Gew-% Silber und Indium, ferner Kupfer-Indium-oder Silber-Indium-Legierungen.

Die Kontaktschichten bestehen vorzugsweise aus Nickel oder Legierungen mit einem hohen Nickelanteil oder aus Silber oder Legierungen mit einem hohen Silberanteil.

Die Kontaktschichten sind vorzugsweise durch Bedrucken (Siebdruck), Tauchen, galvanisch oder chemisch abgeschieden oder durch Kathodenzerstäubung (sputtering), durch Aufdampfen oder mittels Metallspritzverfahren aufgetragen.

Falls erforderlich, ist es vorteilhaft, daß wenigstens die von Kontaktschichten freien Bereiche der Seitenflächen mit elektrisch isolierendem und feuchtedichtem Material, z.B. Kunststoff, bedeckt sind, wie dies auch schon in der US-PS 4 658 328 bzw. der DE-OS 36 12 084 beschrieben ist.

Das eingangs angegebenen Verfahren zur Herstellung eines elektrischen Vielschichtbauelementes ist erfindungsgemäß gekennzeichnet durch die Verfahrensmerkmale:

- Im Verfahrensschritt f) werden nicht poröse und somit für die Metallschmelze dichte Kontaktschichten aus insbesondere Nickel oder Silber durch chemische oder galvanische Abscheidung, mittels Bedrucken (Siebdruck), durch Tauchverfahren, durch Kathodenzerstäubung (sputtering), durch Aufdampfen oder mittels Metallspritzverfahren aufgetragen,

- im Verfahrensschritt g) erfolgt das Einpressen eines flüssigen Metalles, das die Flächen der Keramikschichten in den Hohlräumen gut benetzt, ausschließlich durch die an den Seitenflächen offenen Hohlräume des Keramikkörpers.

Vorzugsweise wird im Verfahrensschritt b) die Suspension in Form von Streifen aufgetragen, die die abgegrenzten Bereiche dar stellen und sich über die gesamte Breite der Schichten erstrekken.

Durch die Erfindung werden folgende Vorteile erzielt:

- Da es sich überraschenderweise gezeigt hat, daß die Verwendung von Metallen oder Metallegierungen, welche die Oberflächen in den Hohlräumen der Keramikschichten des Keramikkörpers gut benetzen, an den Seitenflächen durch Kontraktion des Metalles zu von Metall freien Randbereichen führt, ist auch eine ausreichende Isolation zwischen den einzelnen gegenpoligen Metallbelegungen an den Seitenflächen gewährleistet. Die Kontraktion des eingepreßten Metalles erfolgt nicht an den Stellen, an denen dieses Metall mit den vor dem Einpressen aufgebrachten Metall der Kontaktschichten sich verbunden hat. Im Bedarfsfalle können zur Erhöhung der Isolation die freien Oberflächenteile der Seitenflächen oder auch der gesamte Vielschichtkondensator mit einer Umhüllung aus an sich bekanntem Isoliermaterial versehen werden. An unerwünschten Stellen eventuell vorhandenes Einpressmetall kann in einfacher Weise chemisch oder mechanisch entfernt werden.

- Es werden die Füllwege kleiner, weil das einzupressende Metall von den Seitenflächen her in den Keramikkörper eindringt.

- Die Füllung mit Metall wird in kürzeren Zeiten ermöglicht.

- Beim Herstellen der Keramikkörper ist es nicht mehr erforderlich, auf die einzelnen Suspensionsschichten gewissermaßen abgegrenzte Flecke aus der Suspension für die poröse Zwischenschicht herzustellen, sondern es können über die gesamte Breite der Suspensionsschichten sich erstreckende Bereiche aus Suspensionsmaterial in Streifenform für die poröse Zwischenschicht aufgetragen werden.

- Dadurch ist es auch möglich, nicht nur die Einzelteile zu sintern, sondern es können auch größere Stapel gesintert underst nach dem Sintern in einzelne Keramikkörper aufgeteilt werden, weil die sich zersetzenden und entweichenden Bestandteile der porösen Zwischenschicht dennoch aus diesem größeren Stapel austreten können.

- Beim Einpressen werden wegen der kürzeren Wege verkürzte Tränk zeiten und niedrigere Drucke angewendet, wodurch auch eine geringere Belastung der Keramikkörper erfolgt.

- Durch das Aufbringen der Kontaktschichten vor dem Einpressen der Metallschmelze wird vermieden, daß die einzelnen Keramikkörper in jedem Stand des Verfahrens zusammenkleben oder sogar zusammenschmelzen, insbesondere wenn die Kontaktschichten aus Nickel bestehen.

Vorzugsweise bezieht sich die Erfindung auf Vielschichtkondensatoren, sie ist aber auch bei Kaltleitern oder Varistoren anwendbar.

Die Formulierung, wonach "im Volumen der Hohlräume verteilt Keramikpartikel enthalten sind", schließt sowohl einzelne Partikel ein, die als Stützelemente dienen, als auch ein poröses Gerüst, dessen Poren miteinander über das gesamte Volumen hinweg verbunden sind, so daß das eingepreßte flüssige Metall in jedem Fall vollständig eindringen kann.

Der Begriff "keramisches Material mit dielektrischen oder halbleitenden Eigenschaften" schließt insbesondere auch ferroelektrisches, dielektrisches Material mit Perowskitstruktur ein, zum Beispiel vorzugsweise Titanate der Erdalkalien, insbesondere des Bariums und auch Mischtitanate, bei denen Barium durch andere Erdalkalien oder Magnesium substituiert ist und/oder bei denen das Titan beispielsweise durch Zinn substituiert ist. Das dielektrische Material mit Perowskitstruktur kann mit Zusatzstoffen, wie z.B. Antimon, Wismut oder Lanthan oder seltenen Erdmetallen oder auch mit Kupfer, Eisen dotiert sein, so daß höhere Werte der Dielektrizitätskonstanten oder verbesserte Kaltleitereigenschaften (PTC-Eigenschaften) resultieren oder andere elektrische Eigenschaften, wie z.B. deren Temperaturabhängigkeit oder der Verlustfaktor entsprechend den gewünschten Erfordernissen variiert werden. Ferner schließt obiger Begriff auch die hinreichend bekannten Materialien für Varistoren ein, das sind Widerstände, deren Widerstandswert von der anliegenden Spannung abhängig ist, die auch als Voltage Dependent Resistors (VDR) bezeichnet werden und die als Hauptbestandteil Zinkoxid enthalten.

Die Erfindung wird nachfolgend anhand eines in den beigefügten Figuren dargestellten Ausführungsbeispieles für einen Vielschichtkondensator näher erläutert. Es zeigen:

FIG 1 den monolithischen Keramikkörper vor dem Anbringen der Kontaktschichten und vor der Füllung der Hohlräume mit Metall;.

FIG 2 einen fertigen Vielschichtkondensator in Draufsicht auf die Seitenfläche 6;.

FIG 3 einen Schnitt längs der Linie III - III in FIG 2;

FIG 4 einen Schnitt längs der Linie IV - IV in FIG 1;

FIG 5 einen Schnitt längs der Linie V - V in FIG 1;

FIG 6 einen Schnitt längs der Linie VI - VI in FIG 2;

FIG 7 einen Schnitt längs der Linie VII - VII in FIG 2;

FIG 8 eine Suspensionsschicht mit aufgetragenen Suspensionsstreifen in Draufsicht;

FIG 9 eine weitere Suspensionsschicht mit aufgetragenen Suspensionsstreifen in Draufsicht.

FIG 10 schematisch einen aus mehreren Suspensionsschichten mit aufgetragenen Suspensionsstreifen gebildeten Stapel.

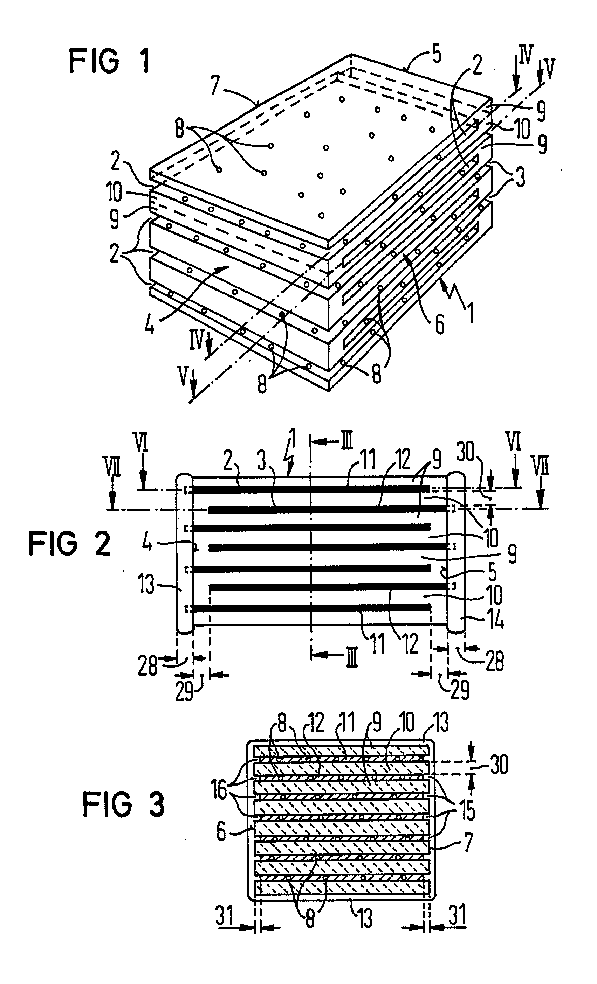

FIG 1 zeigt den gesinterten monolithischen Keramikkörper 1, der von Hohlräumen 2, 3 durchsetzt ist. Die Hohlräume 2 sind zur Stirnfläche 4 und die Hohlräume 3 sind zur Stirnfläche 5 des Keramikkörpers 1 hin offen, beide Hohlräume sind aber auch zu den Seitenflächen 6 und 7 hin offen. Die Keramikpartikel 8 sind über die Volumina der Hohlräume 2 und 3 verteilt, und zwar im Sinne der obigen Erläuterung, und dienen als Stützelemente. Der monolithische Keramikkörper 1 ist aus Keramikschichten 9 und 10 zusammengesintert, die als Dielektrikum dienen.

In FIG 1 ist der Keramikkörper 1 in seinem Zustand nach dem Sintern, jedoch vor dem Anbringen der Kontaktschichten an den Stirnseiten 4 und 5 und vor dem Füllen der Hohlräume 2 und 3 mit niedrig schmelzendem Metall, gezeigt.

FIG 2 zeigt einen fertigen Vielschichtkondensator in Draufsicht auf eine Seitenfläche. Man erkennt den aus den Keramikschichten 9 und 10 zusammengesinterten monolithischen Keramikkörper 1, dessen Hohlräume 2, 3 mit den Metallbelegungen 11 und 12 gefüllt sind. Alternierend von Lage zu Lage enden diese Metallbelegungen 11 und 12 an einander gegenüberliegenden Stirnflächen 4 und 5 und sind dort durch die Kontaktschichten 13 und 14 miteinander elektrisch verbunden.

Die Kontaktschichten 13 und 14 können, wie in den USA-Patentschriften 3 679 950 und 4 071 880 gezeigt, nur die Stirnflächen bedecken. Diese Kontaktschichten sind selbst lötfähig oder weisen eine lötfähige weitere Schicht auf, an die z.B. Stromzuführungsdrähte angelötet werden können.

Es ist aber auch möglich und in vieler Weise vorteilhaft, wenn die Kontaktschichten 13 und 14 nicht nur an den Stirnflächen 4 und 5, sondern auch auf die Seitenflächen 6 und 7 herumreichend ausgebildet sind. Dies ist beispielsweise bei sogenannten Chip-Bauelementen vorteilhaft, weil diese dann auf eine mit gedruckten Leiterbahnen versehenen Schaltplatte unmittelbar aufgelötet werden können.

Für diesen Fall reichen die Kontaktschichten 13 und 14 soweit auf die angrenzenden Seitenflächen 6 und 7 herum, daß eine Auflagefläche mit der Breite 28 resultiert. Diese Breite ist so zu bemessen, daß sie an die Flächen, an denen der Chip-Kondensator anzulöten ist, angepaßt sind.

Der Abstand 29 zwischen dem Ende der Kontaktschichten 13 und 14 und den Enden der auf entgegengesetztem Potential befindlichen Metallbelegungen 12 bzw. 11 muß dabei mindestens so groß sein, wie der Abstand 30 zwischen zwei Metallbelegungen 11 und 12, um die notwendigen Isolationsabstände zu gewährleisten.

In FIG 3, die einen Schnitt längs der Linie III - III in FIG 2 darstellt, ist zu erkennen, daß an den Seitenflächen 6 bzw. 7 von Metall freie Räume 16 bzw. 15 vorhanden sind, die die Isolation zwischen zwei Metallbelegungen 11 und 12 erhöhen, und zwar dadurch, daß die Tiefe 31 dieser von Metall freien Räume 15 und 16 zu der Dicke 30 zwischen zwei Metallbelegungen 11 und 12 hinzukommt.

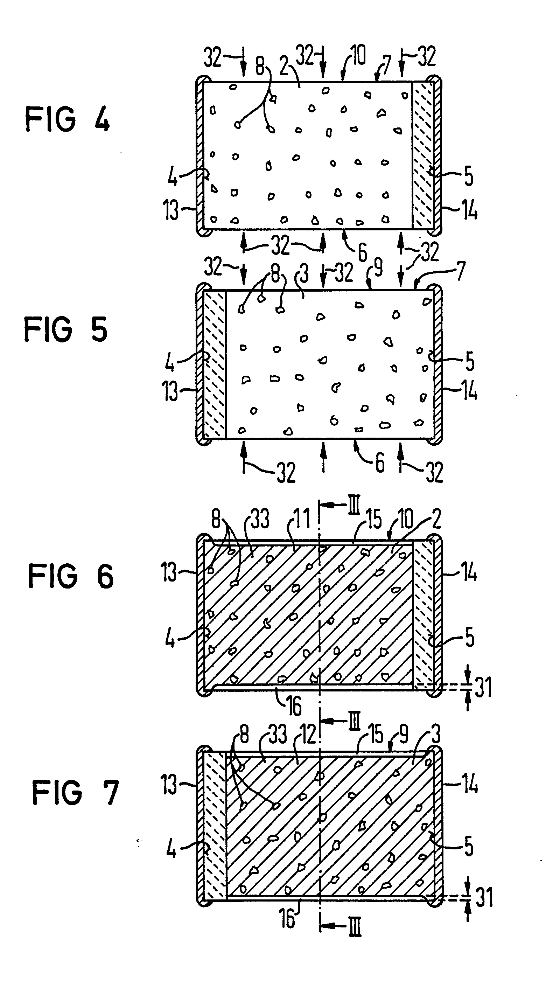

Die FIG 4, 5, 6 und 7, die Schnitte längs den Linien IV - IV und V - V in FIG 1 bzw. VI - VI und VII - VII in FIG 2 darstellen, erläutern schematisch den Prozeß des Einpressens der niedrig schmelzenden, benetzenden Metallschmelze.

In den FIG 4 und 5 erkennt man die einzelnen schon beschriebenen Teile, wobei die Keramikpartikel 8 in den zwischen den Keramikschichten 10 und 9 befindlichen Hohlräumen 2 und 3 zu sehen sind.

Die Metallschmelze wird in die Hohlräume 2 und 3 entsprechend der durch die Pfeile 32 gegebenen Richtung hineingepreßt.

In den FIG 6 und 7 sind die mit bereits erstarrtem Metall gefüllten Hohlräume 2 und 3 zu erkennen, wobei die durch die Kontraktion des erstarrenden Metalles entstandenen, von Metall freien Räume 15 und 16 mit der Tiefe 31 deutlich zu erkennen sind.

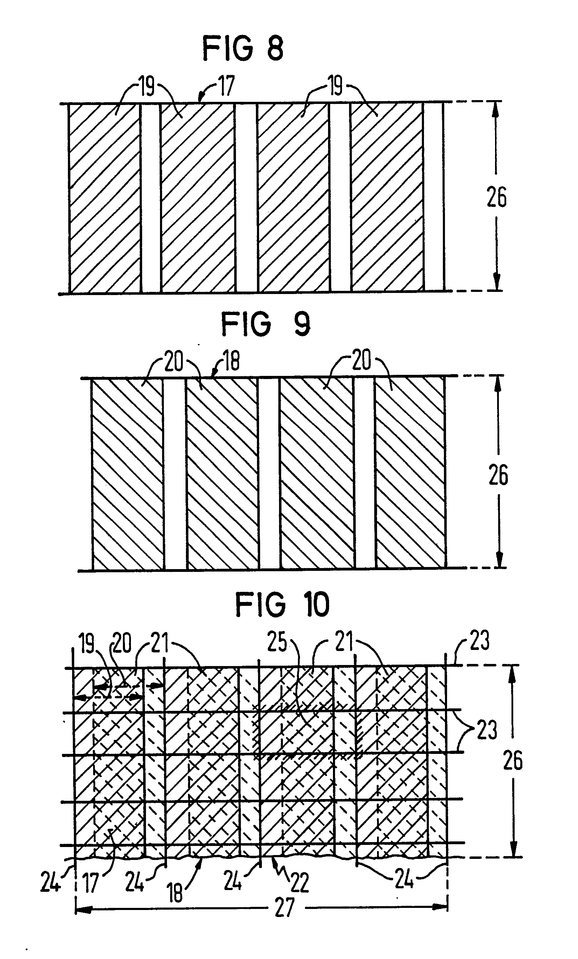

In den FIG 8, 9 und 10 ist das Verfahren zur Herstellung des gesinterten monolithischen Keramikkörpers 1 bis zu einem gewissen Verfahrensstand dargestellt.

Die aus einer Suspension für die Keramikschichten 9 und 10 hergestellten Schichten 17 und 18 (die Herstellung solcher Suspensionsschichten ist hinreichend bekannt; man bedient sich hierfür vorgebrannter, in Pulverform befindlicher Materialien, die im gesinterten Zustand die Dielektrikumsschichten darstellen sollen und die in einem Suspensionsmittel enthalten sind, das sich beim späteren Aufheizvorgang für die Sinterung verflüchtigt) werden über ihre gesamte Breite 26 mit Streifen 19 bzw. 20 versehen, wobei die Herstellung einer solchen Suspension und die Art ihrer Auftragung auf die Suspensionsschichten 17 bzw. 18 ebenfalls z.B. aus den oben angegebenen Patentschriften hin reichend bekannt sind. Mehrere solcher derart vorbereiteter Suspensionsschichten 17 bzw. 18 werden zu einem Stapel 22 derart zusammengelegt, daß die Suspensionsstreifen 19 bzw. 20 sich in einem relativ großen Teilbereich 21 überlappen, wie dies in FIG 10 dargestellt ist. Dieser Stapel 22 wird durch Anwendung von Druck und gegebenenfalls von Wärme verfestigt und (dies ist ein Vorteil der vorliegenden Erfindung) in dieser Form der Sinterung unterworfen und dann längs der Schnittlinie 23 und 24 in Einzelkörper 25, die schraffiert umrandet in FIG 10 dargestellt sind, aufgeteilt, oder es erfolgt die Aufteilung längs der Schnittlinien 23 und 24 zur Bildung der Einzelkörper 25 zunächst und danach die Sinterung mit entsprechendem Aufheiz- und Abkühlschema, wie es ebenfalls hinreichend bekannt ist.

Die Breite 26 und die Länge 27 der Suspensionsschichten 17 und 18 sind, wie aus FIG 10 deutlich entnehmbar, größer als Länge und Breite des letztlich resultierenden Einzelkörpers 25.

Bezugszeichenliste

1 Keramikkörper
2 Hohlräume im Keramikkörper
3 Hohlräume im Keramikkörper 4 Stirnfläche des Keramikkörpers
5 Stirnfläche des Keramikkörpers
6 Seitenfläche des Keramikkörpers
7 Seitenfläche des Keramikkörpers
8 Keramikpartikel zwischen Keramikschichten
9 Keramikschicht als Dielektrikum
10 Keramikschicht als Dielektrikum
11 Metallbelegungen
12 Metallbelegungen
13 Kontaktschicht an der Stirnfläche 4
14 Kontaktschicht an der Stirnfläche 5
15 metallfreie Räume am Rande der Metallbelegung 11
16 metallfreie Räume am Rande der Metallbelegung 12
17 Suspensionsschicht für die Keramikschicht 9
18 Suspensionsschicht für die Keramikschicht 10
19 Suspensionsstreifen auf der Suspensionsschicht 17
20 Suspensionsstreifen auf der Suspensionsschicht 18
21 überlappende Teilbereiche
22 Stapel aus mehreren Suspensionsschichten 17 und 18
23 Schnittlinien in Längsrichtung
24 Schnittlinien in Querrichtung
25 Einzelkörper (schraffiert umrandet)
26 Breite der Schichten 17 bzw. 18
27 Länge der Schichten 17 bzw. 18
28 Breite der Auflagefläche der Kontaktschichten 13 und 14
29 Abstand zwischen den Enden der Kontaktschichten 13 bzw. 14 und den Enden der gegenpoligen Metallbelegungen 12 bzw. 11
30 Abstand zwischen zwei Metallbelegungen 11 und 12
31 Tiefe der metallfreien Räume 15 und 16
32 Pfeile, die die Einpreßrichtung anzeigen
33 erstarrtes Metall

## Ansprüche

1. Elektrisches Vielschichtbauelement, insbesondere Kondensator, Kaltleiter oder Varistor mit den Merkmalen:

a) ein gesinterter, monolithischer Keramikkörper (1) aus keramischem Material mit dielektrischen oder halbleitenden Eigenschaften ist

b) mit Hohlräumen (2,3) versehen, die alternierend von Lage zu Lage zu einander gegenüberliegenden Stirnflächen (4,5) und wenigstens zu einem Teil zu den angrenzenden Seitenflächen (6,7) hin offen sind und im Volumen verteilt Keramikpartikel (8) enthalten, welche in den Hohlräumen (2,3) als Stützelemente zwischen jeweils einer oberen Keramikschicht (9 bzw. 10) und einer unteren Keramikschicht (10 bzw. 9) dienen,

c) die Hohlräume (2,3) sind mit Metallbelegungen (11,12) vollständig gefüllt, die aus einem Metall oder einer Metallegierung bestehen, deren Schmelztemperaturen erheblich niedriger sind, als die für die Sinterung des Keramikkörpers (1) erforderliche Temperatur,

d) an den Stirnflächen (4,5) und gegebenenfalls auch auf die Seitenflächen (6,7) herumreichend sind Kontaktschichten (13,14) vorhanden, die jeweils die Metallbelegungen (11, 12) miteinander elektrisch leitend verbinden und selbst oder durch eine weitere Metallauflage lötfähig sind, **gekennzeichnet** durch die weiteren Merkmale

e) die Hohlräume (2,3) sind über ihre gesamte Länge zu den Seitenflächen (6,7) hin offen,

f) die Metallbelegungen (11,12) bestehen aus einem Metall oder einer Metallegierung mit der Eigenschaft, im flüssigen Zustand die Flächen der Keramikschichten (9,10) in den Hohlräumen (2,3) gut zu benetzen,

g) durch die Kontraktion des abgekühlten Metalles der Metallbelegungen (11,12) sind in den Hohlräumen (2,3) an den Seitenflächen (6,7) von Metall freie Räume (15,16) vorhanden,

h) die Kontaktschichten (13,14) an den Stirnflächen (4,5) sind nicht porös.

2. Elektrisches Vielschichtbauelement nach Anspruch 1, **dadurch gekennzeichnet,** daß die Metallbelegungen (11,12) aus einer Blei-Indium-Legierung mit einem Indiumanteil von gleich oder größer als 0,5 Gew-%, insbesondere 2,5 bis 20 Gew-%, bestehen.

Elektrisches Vielschichtbauelement nach Anspruch 1, **dadurch gekennzeichnet,** daß die Metallbelegungen (11,12) aus einer Blei-Silber-Indium-Legierung mit wenigstens 0,5 Gew-% Indium und insgesamt bis 20 Gew-% Silber und Indium bestehen.

4. Elektrisches Vielschichtbauelement nach Anspruch 1, **dadurch gekennzeichnet,** daß die Metallbelegungen (11,12) aus Kupfer-Indium- oder Silber-Indium-Legierungen bestehen.

5. Elektrisches Vielschichtbauelement nach Anspruch 1, **dadurch gekennzeichnet,** daß die Kontaktschichten (13,14) aus Nickel oder Legierungen mit einem hohen Nickelanteil bestehen.

6. Elektrisches Vielschichtbauelement nach Anspruch 1, **dadurch gekennzeichnet,** daß die Kontaktschichten (13,14) aus Silber oder Legierungen mit einem hohen Silberanteil bestehen.

7. Elektrisches Vielschichtbauelement nach Anspruch 1, **dadurch gekennzeichnet,** daß die Kontaktschichten (13,14) durch Bedrucken (Siebdruck), Tauchen, galvanisch oder chemisch abgeschieden sind oder durch Kathodenzerstäubung (sputtering), durch Aufdampfen oder mittels Metallspritzverfahren aufgetragen sind.

8. Elektrisches Vielschichtbauelement nach Anspruch 1, **da durch gekennzeichnet,** daß wenigstens die von Kontaktschichten (13,14) freien Bereiche der Seitenflächen (6, 7) mit elektrisch isolierendem und feuchtedichtem Material bedeckt sind.

9. Verfahren zur Herstellung eines elektrischen Vielschichtbauelementes, insbesondere eines Kondensators, Kaltleiters oder Varistors nach Anspruch 1 mit den Verfahrensschritten:

a) es werden 0,03 bis 0,1 mm dicke Schichten (17,18), deren Breite (26) und Länge (27) je ein Vielfaches der Breite und Länge der späteren Keramikkörper (1) betragen, aus einer Suspension, die dielektrisches oder halbleitendes Material in feiner Verteilung enthält, hergestellt und getrocknet,

b) auf diese Schichten (17,18) wird in Form von abgegrenzten Bereichen (19,20) in bestimmter Anordnung und in einer Dicke von 0,005 bis 0,02 mm eine Suspension aufgetragen (z.B. aufgedruckt) und eingetrocknet, die beim späteren Sintern gemäß Verfahrensschritt e) entweichende Bestandteile (Oxide, Karbonate, Kohlenstoff oder Ruß) und Keramikpartikel enthält, die beim späteren Sintern gemäß Verfahrensschritt e) im wesentlichen unverändert bleiben,

c) aus einer Vielzahl solcher Schichten (17,18) wird ein Stapel (22) gebildet, in welchem sich die Suspensionsbereiche (19,20) in großen Teilbereichen (21) überlappen und der gegebenenfalls oberhalb und/odere unterhalb mit von Suspensionsbereichen freien, als Decklagen dienenden Suspensionsschichten versehen ist,

d) der Stapel (22) wird durch einen Preßvorgang verdichtet und anschließend oder erst nach dem Sintern längs von Schnittlinien (23,24) in Längs- und in Querrichtung zerteilt,

e) der verdichtete Stapel (22) oder die daraus entstandenen Einzelkörper (25) werden mit entsprechendem Aufheiz- und Abkühlverlauf bei Tempeaturen von 1000°C oder höher gesintert,

f) die gesinterten Keramikkörper (1) werden an den Stirnflächen (4,5) mit Kontaktschichten (13,14) versehen,

g) die mit Kontaktschichten (13,14) versehenen Keramikkörper (1) werden in einem Autoklaven, gegebenenfalls nach vorheriger Evakuierung, in eine Metallschemlze zum Einpressen von Metall in die Hohlräume (2,3) mittels Überdruck getaucht und dann oberhalb der Metallschmelze abgekühlt mit anschließender Reduktion des Überdruckes auf Normaldruck,

**gekennzeichnet** durch die Verfahrensmerkmale:

- im Verfahrensschritt f) werden nicht poröse und somit für die Metallschmelze dichte Kontaktschichten (13,14) aus insbesondere Nickel oder Silber durch chemische oder galvanische Abscheidung, mittels Bedrucken (Siebdruck), Tauchverfahren, durch Kathodenzerstäubung (sputtering), durch Aufdampfen oder mittels Metallspritzverfahren aufgetragen,

- im Verfahrensschritt g) erfolgt das Einpressen eines flüssigen Metalles, das die Flächen der Keramikschichten (9, 10) in den Hohlräumen (2, 3) gut benetzt, ausschließlich durch die an den Seitenflächen (6,7) offenen Hohlräume (2,3) des Keramikkörpers (1).

10. Verfahren nach Anspruch 9, **dadurch gekennzeichnet,** daß im Verfahrensschritt b) die Suspension in Form von Streifen aufgetragen wird, die die abgegrenzten Bereiche (19, 20) darstellen und sich über die gesamte Breite (26) der Schichten (17, 18) erstrecken.

EP 0 301 321 A1

FIG 1

FIG 2

FIG 3

FIG 4

FIG 5

FIG 6

FIG 7

FIG 8

FIG 9

FIG 10

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| D,A | US-A-3 679 950 (NL INDUSTRIES INC.) <br> * Beispiel 10 * <br> --- | 1 | H 01 G 4/30 <br> H 01 C 7/10 <br> H 01 C 1/14 |
| A,D | US-A-4 071 880 (NL INDUSTRIES INC) <br> * Beispiel 6 * <br> --- | 2 | |
| A,D | GB-A-2 162 371 (AVX CORP.) <br> * Seite 4, Zeile 55 - Seite 6, Zeile 27 * <br> --- | 1,5-7 | |
| A,D <br> P | EP-A-0 258 670 (SIEMENS AG) <br> * Ansprüche 1-5 * <br> ----- | 1-4 | |

RECHERCHIERTE SACHGEBIETE (Int. Cl.4)

H 01 G
H 01 C

Der vorliegende Recherchenbericht wurde für alle Patentansprüche erstellt

| Recherchenort | Abschlußdatum der Recherche | Prüfer |
|---|---|---|
| DEN HAAG | 10-11-1988 | SCHUERMANS N.F.G. |